# EUROPEAN PATENT SPECIFICATION

(11) **EP 3 472 004 B1**
(45) Date of publication and mention of the grant of the patent: **28.04.2021**
(21) Application number: 16731852.6
(22) Date of filing: 20.06.2016
(51) Int. Cl.: B60S 1/38

(54) **A WINDSCREEN WIPER DEVICE OF THE FLAT BLADE TYPE**
SCHEIBENWISCHERVORRICHTUNG MIT FLACHEN WISCHERBLÄTTERN
DISPOSITIF DE TYPE ESSUIE-GLACE DU TYPE À BALAI PLAT

(43) Date of publication of application: 24.04.2019
(73) Proprietor: Federal-Mogul S.A., 6790 Aubange (BE)
(72) Inventor: STEINER, Elodie, F54440 Herserange (FR)
(74) Representative: Hooiveld, Arjen Jan Winfried
(86) International application number: PCT/EP2016/064212
(87) International publication number: WO 2017/220122

(56) References cited:
- EP-A1- 0 743 231
- EP-A1- 2 105 362
- EP-A1- 2 236 364
- DE-A1-102005 053 811
- DE-A1-102006 046 357

## Description

The present invention relates to a windscreen wiper device of the flat blade type comprising an elastic, elongated carrier element, as well as an elongated wiper blade, which can be placed in abutment with a windscreen to be wiped, which wiper blade includes at least one longitudinal groove, in which groove a longitudinal strip of the carrier element is disposed, which windscreen wiper device comprises a connecting device for an oscillating arm, wherein said wiper blade comprises an elongated upper holding part and an elongated lower wiping part of a flexible material, wherein said holding part holds said longitudinal strip, wherein said wiping part comprises a wiping lip, and wherein said holding part and said wiping part are interconnected by means of a tilting web. Particularly, said oscillating arm can be pivotally connected to said connecting device with the interposition of a joint part. More in particular, said wiper blade comprises a spoiler at a side thereof facing away from the windscreen to be wiped, wherein said wiper blade and said spoiler are preferably made in one piece through extrusion. Said longitudinal groove is preferably a central longitudinal groove accommodating said longitudinal strip. Said longitudinal strip is also called a "flexor", while said connecting device is also indicated as a "connector". In the framework of the present invention said connector is preferably made in one piece, also called a "one piece connector".

Such a windscreen wiper device is generally known. The prior art windscreen wiper device is in particular designed as a "yokeless" wiper device or "flat blade", wherein use is no longer made of several yokes pivotally connected to each other, but wherein the wiper blade is biased by the carrier element, as a result of which it exhibits a specific curvature. The holding part, the wiping part and the tilting web of the known windscreen wiper device are made in one piece Document DE 10 2005 053811 A1 discloses a windscreen wiper device according to the preamble of claim 1.

A disadvantage of the known windscreen wiper device is the following. In practice said oscillating arm is connected to a mounting head fixed for rotation to a shaft driven by a small motor. In use, the shaft rotates alternately in a clockwise and in a counter-clockwise sense carrying the mounting head into rotation also, which in turn draws said oscillating arm into rotation and by means of said connecting device moves said wiper blade. The tilting web acts as an intermediate part subjected to a force in accordance with the wiping direction. Said force acts solely on said tilting web, so that the wiping lip attached to said wiping part is guided in opposite direction to the wiping direction. Particularly, said tilting web is strip-shaped, whereas said wiping lip is triangular in shape. However, the oscillatory movement of said wiping lip along the windscreen to be wiped results in a significant reversal noise, particularly as a consequence of said wiping lip being tumbled over at each turning point of its oscillatory movement.

It is an object of the invention to improve the prior art, that is to provide a windscreen wiper device wherein the above disadvantage is obviated at minimum costs.

It is noted that the present invention is not restricted to windscreen wiper devices for cars, but that it also relates to windscreen wiper devices for rail coaches and all other (fast) vehicles.

In order to accomplish that objective, a windscreen wiper device of the kind referred to in the introduction according to the invention is characterized in that said wiper blade comprises noise dampening profiles forming stops for said wiping part at turning points of an oscillatory movement of said wiping part, wherein said noise dampening profiles are provided between said holding part and longitudinal sides of said wiping part facing towards said holding part, wherein said holding part comprises downwardly extending protrusions forming stops for said noise dampening profiles at said turning points of said oscillatory movement of said wiping part, and wherein said protrusions are located closer to a vertical median plane of said wiping part than stop locations for said wiping part on said noise dampening profiles. Said vertical median plane of said wiping part is also a plane of symmetry of said wiping part, i.e. said wiping lip. In other words, said stop locations for said wiping part on said noise dampening profiles are beyond said protrusions, seen from said vertical median plane of said wiping part.

The present invention is particularly based on the awareness that said reversal noise resulting from the oscillatory movement of said wiping part or wiping lip along the windscreen to be wiped, particularly as a consequence of said wiping part being tumbled over at each turning point of its oscillatory movement, can be considerably reduced by exerting an increasing pressure onto said wiping part by said noise dampening profiles on each side of the tilting web. Firstly, when the wiping lip engages one of the noise dampening profiles on one side of the tilting web, the wiping lip would encounter a counter force due to the resiliency of this noise dampening profile. Secondly, when the wiping lip forces the noise dampening profile to further bend laterally outwardly until the latter engages one of the downwardly extending protrusions on said side of the tilting web, the wiping lip would encounter an increased counter force due to the rigidity of this downwardly extending protrusion. Thirdly, when a free end or extremity of the noise dampening profile is further deformed by the wiping lip, the wiping lip would encounter a maximum counter force due to the resiliency of this free end/extremity. Experiments have shown that the noise caused by said wiping lip being swung over at each turning point of its oscillatory movement, is thus minimalized. The use of the downwardly extending protrusions of the holding part has the additional advantage that their location, i.e. their distance to the medial vertical plane of the wiping part, can easily adjusted in a manufacturing die in the event that a smaller or larger wiping part is used.

It is noted that the present invention is not restricted to the use of only one longitudinal strip forming the elastic carrier element that is particularly located in a central longitudinal groove of the wiper blade. Instead, said carrier element may also comprise two longitudinal strips, wherein said strips are disposed in opposite longitudinal grooves of the wiper blade. Said groove(s) may be closed at one outer end.

Further, it is noted that in the invention use is made of a mounting head fixed for rotation to a shaft, wherein said shaft is rotatable alternately in a clockwise and in a counter-clockwise sense carrying said mounting head into rotation. Thus, in turn said mounting head draws said connecting device into rotation and thereby moves said wiper blade. In the alternative, said mounting head is fixed for translation to a carriage, wherein said carriage can be translated alternately in a one linear direction and in another counter linear direction carrying said mounting head into translation. The present invention can therefore be used for circular or linear movement of said mounting head.

In one preferred embodiment of a windscreen wiper device in accordance with the invention said said protrusions are located at a distance from said vertical median plane of said wiping part chosen in the range of 1 mm and 2,5 mm. Preferably, said stop locations for said wiping part on said noise dampening profiles are located at a distance from said vertical median plane of said wiping part chosen in the range of 1,2 mm and 3 mm.

In another preferred embodiment of a windscreen wiper device according to the invention said protrusions extend downwardly from flat longitudinal sides of said holding part facing towards said wiping part.

In another preferred embodiment of a windscreen wiper device in accordance with the invention said holding part, said wiping part, said noise dampening profiles and said protrusions are made in one piece of material. Particularly, said wiper blade is made in one piece of elastomer material, that is that said holding part, said wiping part, said noise dampening strips and said protrusions (said tilting web inclusive) are integral.

In another preferred embodiment of a windscreen wiper device according to the invention said noise dampening profiles are formed by strips arranged at an acute angle to said holding part. Preferably, said protrusions are in the shape of a V.

The invention also relates to a wiper blade as defined by a windscreen wiper device in accordance with the invention preferably made by extrusion or injection molding.

The invention will now be explained in more detail with reference to figures illustrated in a drawing, wherein:
- figure 1 is a perspective, schematic view of a preferred embodiment of a windscreen wiper device according to the invention; and
- figures 2 through 7 are cross-sectional views of the windscreen wiper device of figure 1 and show in successive steps how an increased pressure is exerted on a wiping part thereof in accordance with the invention.

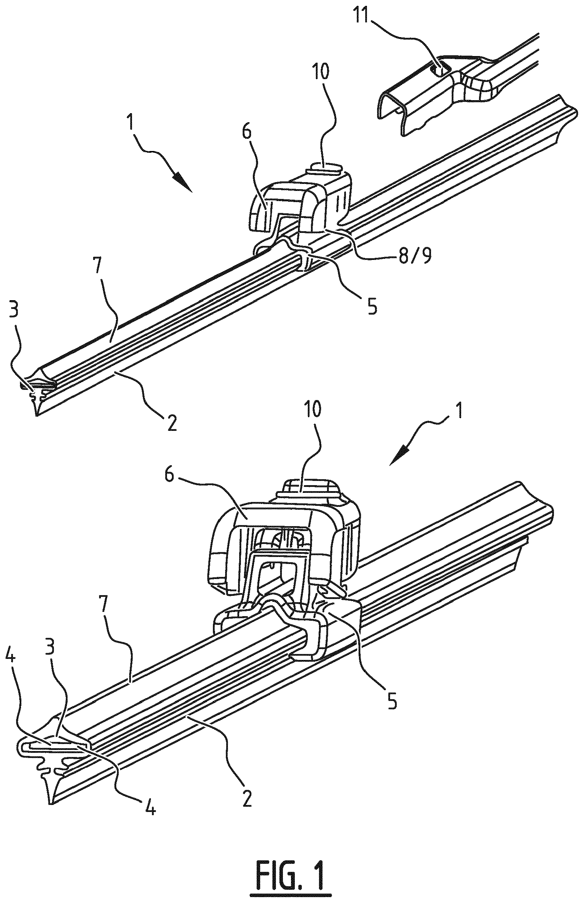

Figures 1 shows a preferred variant of a windscreen wiper device 1 according to the invention. Said windscreen wiper device 1 is built up of an elastomeric wiper blade 2 comprising a central longitudinal groove 3, wherein a longitudinal strip 4 made of spring band steel is fitted in said longitudinal groove 3. Said strip 4 forms a flexible carrier element for the rubber wiper blade 2, as it were, which is thus biased in a curved position (the curvature in operative position being that of a windscreen to be wiped). The windscreen wiper device 1 is furthermore built up of a connecting device 5 of metal or plastic for connecting an oscillating wiper arm thereto, with the interposition of a joint part 6. The oscillating wiper arm is pivotally connected to the connecting device 5 about a pivot axis near one end. The preferred embodiment of figure 1 according to the invention comprises a spoiler or "air deflector" 7 which is made in one piece with the rubber wiper blade 2 and which extends along the entire length thereof. No end caps are used, but free ends of said wiper blade 2 are cut at an oblique angle. In the alternative end caps may be used.

Although not shown in figure 1, but fully understood by a skilled person, said oscillating arm is connected to a mounting head fixed for rotation to a shaft driven by a small motor. In use, the shaft rotates alternately in a clockwise and in a counter-clockwise sense carrying the mounting head into rotation also, which in turn draws said oscillating arm into rotation and by means of said connecting device 5 moves said wiper blade 2.

Said joint part 6 is detachably connected to said connecting device 5 by engaging protrusions 8 of said connecting device 5, at the location of said pivot axis, in co-axial recesses 9 provided in said joint part 6. As will be clear, said protrusions 8 extend outwards on either side of said connecting device 5. The joint part 6 comprises a resilient tongue 10 extending outwardly, while the oscillating arm has a U-shaped cross-section at the location of its connection to said joint part 6, so that the tongue 10 engages in an identically shaped hole 11 provided in a base of said U-shaped cross-section. The connecting device 5 with the wiper blade 2 is mounted onto the oscillating arm as follows. The joint part 6 being already clipped onto the connecting device 5 is pivoted relative to the connecting device 5, so that said joint part 6 can be easily slided on a free end of the oscillating arm. During this sliding movement the resilient tongue 10 is initially pushed in against a spring force and then allowed to spring back into said hole 11 in said oscillating arm, thus snapping, that is clipping the resilient tongue 10 into the hole 11 of the oscillating arm. This is a so-called bayonet-connection. The oscillating arm together with the joint part 6 may then be pivoted back in a position parallel to the wiper blade 2 in order to be ready for use. By subsequently pushing in again said resilient tongue 10 against the spring force (as if it were a push button), the connecting device 5 and the joint part 6 together with the wiper blade 2 may be released from the oscillating arm. Dismounting the connecting device 5 with the wiper blade 2 from the oscillating arm is thus realized by sliding the connecting device 5 and the joint part 6 together with the wiper blade 2 in a direction away from the oscillating arm.

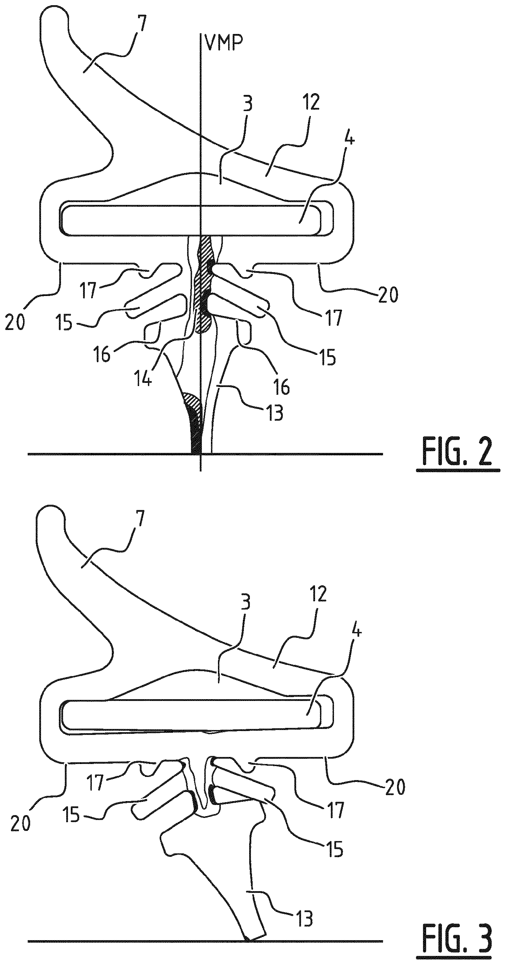

With reference to figures 2 through 7 said wiper blade 2 comprises an elongated upper holding part 12 and an elongated lower wiping part of 13. Said holding part 12 holds said longitudinal strip 4, whereas said wiping part 13 comprises a wiping lip with a triangular cross-section. Said holding part 12 and said wiping part 13 are interconnected by means of a tilting web 14 and are in one piece of material. Said wiper blade 2 comprises noise dampening profiles formed by two strips 15 arranged at an acute angle to said holding part 12. As shown, said strips 15 are provided between said holding part 12 and holding-part-side longitudinal sides or edges 16 of said wiping part 13.

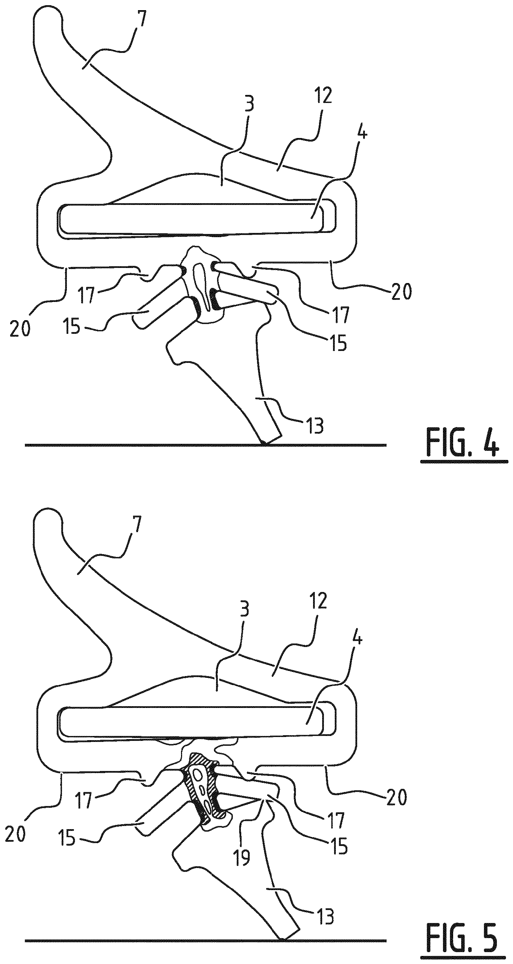

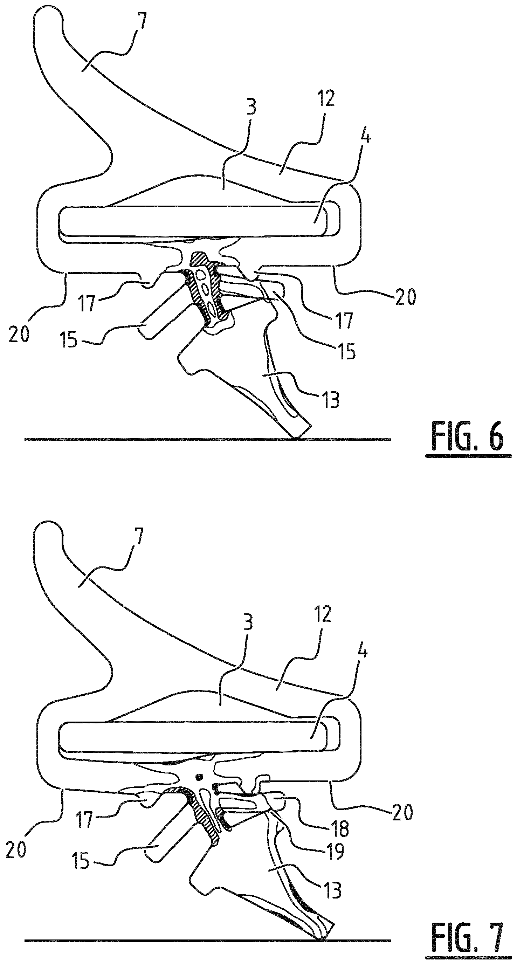

In figure 2 said wiping part 13 is shown in its central or middle position during its oscillatory movement, while in figures 3 through 6 said wiping part 13 is moved to its turning point of its oscillatory movement. In figure 7 said wiping part 13 is at its tumble or turning point of oscillatory movement. As shown in figures 2 through 7 said strips 15 form stops for shoulders of said wiping part 13 towards and at its turning point of its oscillatory movement. When the wiping part 13 engages one of the strips 15 on one side of the tilting web 14, the wiping part 13 encounters a counter force due to the resiliency of this strip 15 (figure 3). This counter force is increased when this strip 15 is forced by said wiping part 13 to further bend laterally outwardly (figure 4). The wiping part 13 encounters an even higher counter force when the strip 15 is forced to further bend laterally outwardly in order to engage a downwardly extending protrusions 17 on said side of the tilting web 14 due to the rigidity of this downwardly extending protrusion 17 (figures 5 and 6). In figure 7 is shown that a free end or extremity 18 of the strip 15 is further deformed by the wiping part 13, so that the wiping part 13 encounters a maximum counter force due to the resiliency of this free end/extremity 18. This made possible because said protrusions 17 are located closer to a vertical median plane VMP of said wiping part 13 than stop locations 19 for said wiping part 13 on said strips 15. As depicted, said protrusions 17 extend downwardly from flat longitudinal sides or edges 20 of said holding part 12 facing towards said wiping part 13.

Said holding part 12, said wiping part 13, said noise dampening strips 15 and said protrusions 17 are made in one piece of material.

The present invention is not restricted to the embodiment shown, but also extends to other preferred variants falling within the scope of the appended claims.

## Claims

1. A windscreen wiper device (1) of the flat blade type comprising an elastic, elongated carrier element, as well as an elongated wiper blade (2), which can be placed in abutment with a windscreen to be wiped, which wiper blade (2) includes at least one longitudinal groove (3), in which groove (3) a longitudinal strip (4) of the carrier element is disposed, which windscreen wiper device (1) comprises a connecting device (5) for an oscillating arm, wherein said wiper blade (2) comprises an elongated upper holding part (12) and an elongated lower wiping part (13) of a flexible material, wherein said holding part (12) holds said longitudinal strip (4), wherein said wiping part (13) comprises a wiping lip, and wherein said holding part (12) and said wiping part (13) are interconnected by means of a tilting web (14), wherein said wiper blade (2) comprises noise dampening profiles forming stops for said wiping part (13) at turning points of an oscillatory movement of said wiping part (13), wherein said noise dampening profiles are provided between said holding part (12) and longitudinal sides (16) of said wiping part (13) facing towards said holding part (12), wherein said holding part (12) comprises downwardly extending protrusions (17) forming stops for said noise dampening profiles at said turning points of said oscillatory movement of said wiping part (13), and **characterised in that** said protrusions (17) are located closer to a vertical median plane (VMP) of said wiping part (13) than stop locations (19) for said wiping part (13) on said noise dampening profiles.

2. A windscreen wiper device (1) according to claim 1, wherein said protrusions (17) are located at a distance from said vertical median plane (VMP) of said wiping part (13) chosen in the range of 1 mm and 2,5 mm.

3. A windscreen wiper device (1) according to claim 1 or 2, wherein said stop locations (19) for said wiping part (13) on said noise dampening profiles are located at a distance from said vertical median plane (VMP) of said wiping part (13) chosen in the range of 1,2 mm and 3 mm.

4. A windscreen wiper device (1) according to claim 1, 2 or 3, wherein said protrusions (17) extend downwardly from flat longitudinal sides (20) of said holding part (12) facing towards said wiping part (13).

5. A windscreen wiper device (1) according to any of the preceding claims 1 through 4, wherein said holding part (12), said wiping part (13), said noise dampening profiles and said protrusions (17) are made in one piece of material.

6. A windscreen wiper device (1) according to any of the preceding claims 1 through 5, wherein said noise dampening profiles are formed by strips (15) arranged at an acute angle to said holding part (12).

7. A windscreen wiper device (1) according to any of the preceding claims 1 through 6, wherein said protrusions (17) are in the shape of a V.

8. A wiper blade (2) as defined by a windscreen wiper device (1) according to any of the preceding claims 1 through 7.

## Patentansprüche

1. Scheibenwischervorrichtung (1) von dem Flachblatttyp, umfassend ein elastisches, längliches Trägerelement sowie ein längliches Wischerblatt (2), das in Angrenzung mit einer zu wischenden Windschutzscheibe platziert werden kann, wobei das Wischerblatt (2) wenigstens eine längslaufende Nut (3) einschließt, wobei in der Nut (3) ein längslaufender Streifen (4) des Trägerelements angeordnet ist, wobei die Scheibenwischervorrichtung (1) eine Verbindungsvorrichtung (5) für einen oszillierenden Arm umfasst, wobei das Wischerblatt (2) ein längliches oberes Halteteil (12) und ein längliches unteres Wischteil (13) aus einem flexiblen Material umfasst, wobei das Halteteil (12) den längslaufenden Streifen (4) hält, wobei das Wischteil (13) eine Wischlippe umfasst, und wobei das Halteteil (12) und das Wischteil (13) mittels eines Kippstegs (14) miteinander verbunden sind, wobei das Wischerblatt (2) geräuschdämpfende Profile umfasst, die Anschläge für das Wischteil (13) an Wendepunkten einer oszillierenden Bewegung des Wischteils (13) bilden, wobei die geräuschdämpfenden Profile zwischen dem Halteteil (12) und längslaufenden Seiten (16) des Wischteils (13) bereitgestellt sind, die dem Halteteil (12) zugewandt sind, wobei das Halteteil (12) sich nach unten erstreckende Vorsprünge (17) umfasst, die Anschläge für die geräuschdämpfenden Profile an den Wendepunkten der oszillierenden Bewegung des Wischteils (13) bilden, und **dadurch gekennzeichnet sind, dass**
sich die Vorsprünge (17) näher an einer vertikalen Mittelebene (VMP) des Wischteils (13) befinden als Anschlagstellen (19) für das Wischteil (13) an den geräuschdämpfenden Profilen.

2. Scheibenwischervorrichtung (1) nach Anspruch 1, wobei sich die Vorsprünge (17) in einem Abstand von der vertikalen Mittelebene (VMP) des Wischteils (13) befinden, gewählt in dem Bereich von 1 mm und 2,5 mm.

3. Scheibenwischervorrichtung (1) nach Anspruch 1 oder 2, wobei sich die Anschlagstellen (19) für das Wischteil (13) an den geräuschdämpfenden Profilen in einem Abstand von der vertikalen Mittelebene (VMP) des Wischteils (13) befinden, gewählt in dem Bereich von 1,2 mm und 3 mm.

4. Scheibenwischervorrichtung (1) nach Anspruch 1, 2 oder 3, wobei sich die Vorsprünge (17) von flachen längslaufenden Seiten (20) des Halteteils (12) nach unten erstrecken, zugewandt dem Wischteil (13).

5. Scheibenwischervorrichtung (1) nach einem der vorhergehenden Ansprüche 1 bis 4, wobei das Halteteil (12), das Wischteil (13), die geräuschdämpfenden Profile und die Vorsprünge (17) aus einem Stück Material hergestellt sind.

6. Scheibenwischervorrichtung (1) nach einem der vorhergehenden Ansprüche 1 bis 5, wobei die geräuschdämpfenden Profile durch Streifen (15) gebildet sind, die in einem spitzen Winkel zu dem Halteteil (12) angeordnet sind.

7. Scheibenwischervorrichtung (1) nach einem der vorhergehenden Ansprüche 1 bis 6, wobei die Vorsprünge (17) die Form eines V haben.

8. Wischerblatt (2) wie definiert durch eine Scheibenwischervorrichtung (1) nach einem der vorhergehenden Ansprüche 1 bis 7.

## Revendications

1. Dispositif d'essuie-glace de pare-brise (1) du type à balai plat comprenant un élément porteur allongé élastique, ainsi qu'un balai d'essuie-glace allongé (2), qui peut être positionné en butée contre un pare-brise à essuyer, lequel balai d'essuie-glace (2) inclut au moins une rainure longitudinale (3), dans laquelle rainure (3) une bande longitudinale (4) de l'élément porteur est disposée, lequel dispositif d'essuie-glace de pare-brise (1) comprend un dispositif de liaison (5) pour un bras oscillant, dans lequel ledit balai d'essuie-glace (2) comprend une partie de maintien supérieure allongée (12) et une partie d'essuyage inférieure allongée (13) d'un matériau flexible, dans lequel ladite partie de maintien (12) maintient ladite bande longitudinale (4), dans lequel ladite partie d'essuyage (13) comprend une lèvre d'essuyage, et dans lequel ladite partie de maintien (12) et ladite partie d'essuyage (13) sont reliées entre elles au moyen d'une traverse basculante (14), dans lequel ledit balai d'essuie-glace (2) comprend des profils d'amortissement du bruit formant des arrêts pour ladite partie d'essuyage (13) au niveau de points d'inversion d'un mouvement oscillatoire de ladite partie d'essuyage (13), dans lequel lesdits profils d'amortissement du bruit sont fournis entre ladite partie de maintien (12) et des côtés longitudinaux (16) de ladite partie d'essuyage (13) faisant face à ladite partie de maintien (12), dans lequel ladite partie de maintien (12) comprend des saillies (17) s'étendant vers le bas formant des arrêts pour lesdits profils d'amortissement du bruit au niveau desdits points d'inversion dudit mouvement oscillatoire de ladite partie d'essuyage (13), et **caractérisé en ce que** lesdites saillies (17) sont situées plus près d'un plan médian vertical (PMV) de ladite partie d'essuyage (13) que d'emplacements d'arrêt (19) pour ladite partie d'essuyage (13) sur lesdits profils d'amortissement du bruit.

2. Dispositif d'essuie-glace de pare-brise (1) selon la revendication 1, dans lequel lesdites saillies (17) sont situées à une distance dudit plan médian vertical (PMV) de ladite partie d'essuyage (13) choisie dans la plage de 1 mm et 2,5 mm.

3. Dispositif d'essuie-glace de pare-brise (1) selon la revendication 1 ou 2, dans lequel lesdits emplacements d'arrêt (19) pour ladite partie d'essuyage (13) sur lesdits profils d'amortissement du bruit sont situés à une distance dudit plan médian vertical (PMV) de ladite partie d'essuyage (13) choisie dans la plage de 1,2 mm et 3 mm.

4. Dispositif d'essuie-glace de pare-brise (1) selon la revendication 1, 2 ou 3, dans lequel lesdites saillies (17) s'étendent vers le bas à partir de côtés longitudinaux plats (20) de ladite partie de maintien (12) faisant face à ladite partie d'essuyage (13).

5. Dispositif d'essuie-glace de pare-brise (1) selon l'une quelconque des revendications 1 à 4 précédentes, dans lequel ladite partie de maintien (12), ladite partie d'essuyage (13), lesdits profils d'amortissement du bruit et lesdites saillies (17) sont fabriqués en une seule pièce de matière.

6. Dispositif d'essuie-glace de pare-brise (1) selon l'une quelconque des revendications 1 à 5 précédentes, dans lequel lesdits profils d'amortissement du bruit sont formés par des bandes (15) agencées à un angle aigu par rapport à ladite partie de maintien (12).

7. Dispositif d'essuie-glace de pare-brise (1) selon l'une quelconque des revendications 1 à 6 précédentes, dans lequel lesdites saillies (17) sont en forme de V.

8. Balai d'essuie-glace (2) tel que défini par un dispositif d'essuie-glace de pare-brise (1) selon l'une quelconque des revendications 1 à 7 précédentes.
